# EUROPÄISCHE PATENTSCHRIFT

(11) **EP 2 746 634 B1**
(45) Veröffentlichungstag und Bekanntmachung des Hinweises auf die Patenterteilung: **05.05.2021**
(21) Anmeldenummer: 13198530.1
(22) Anmeldetag: 19.12.2013
(51) Int. Cl.: F16L 3/223, H02G 3/22, H02G 3/30

(54) **Kabelhalter mit einem U-förmigen Rahmen und einer Anzahl von Tüllen zum Hindurchführen von Kabeln**
Cable holder with a U-Shape frame and multiple sockets for the leadthrough of cables
Support de cable avec un cadre en forme de U et prises multiples pour le passage de cables.

(30) Priorität: 21.12.2012 DE 102012025126
(43) Veröffentlichungstag der Anmeldung: 25.06.2014
(73) Patentinhaber: icotek project GmbH & Co. KG, 73569 Eschach (DE)
(72) Erfinder: Ehmann, Bruno, 73563 Mögglingen (DE)
(74) Vertreter: Dr. Weitzel & Partner

(56) Entgegenhaltungen:
- WO-A2-01/42046
- DE-A1- 19 852 133
- DE-U1- 9 407 618
- US-A- 3 203 655
- US-A- 3 894 706
- US-A- 4 347 998
- US-B1- 6 561 466

## Beschreibung

Die Erfindung betrifft einen rechteckigen Kabelhalter. Solche Kabelhalter dienen dem Zusammenfassen und Halten einer Anzahl von Kabeln oder sonstigen Strängen, die in Tüllen eingelegt sind. Der Rahmen ist in Seitenansicht U-förmig. Er weist demgemäß zwei Schenkel sowie einen diese beiden miteinander verbindenden Steg auf. Die genannten Tüllen weisen eine Bohrung zum Hindurchführen eines Kabels auf. Die Tüllen bestehen aus elastischem Material. Die einzelne Tülle weist häufig einen Schlitz auf, sodass die Tülle gespreizt werden kann, um ein Kabel einzulegen. Die mit Kabeln bestückten Tüllen werden sodann in den Innenraum des Rahmens eingelegt und füllen diesen aus. Hieran befindet sich ein Riegel. Dieser wird an seinen beiden Enden jeweils mit einem Schenkel fest verbunden. Dabei übt der Riegel auf die Tüllen einen Druck aus, sodass die Gesamtheit der kabelbestückten Tüllen innerhalb des Rahmens ein festes Paket darstellt.

US 2 417 260 beschreibt eine ähnliche Ausführungsform, aus der man einen Riegel erkennt, welcher auf einem Schenkel des U-förmigen Rahmens aufliegt und durch eine Schraube mit dem Schenkel fest verbunden ist. Im montierten Zustand werden auch hier wiederum die Tüllen mit den darin eingelegten Kabeln eingespannt.

Das sogenannte Konfektionieren eines Kabelhalters gemäß dem Stand der Technik ist aufwändig. Eine Verschraubung ist bezüglich der Herstellungskosten und der Montagezeit aufwändig.

US 6 561 466 B1 beschreibt einen Kabelhalter mit zwei baugleichen, U-förmigen Rahmenteilen, die zusammensteckbar sind. Die beiden Rahmenteile dienen der Aufnahme von Tüllenhaltern. Jeder Tüllenhalter besteht aus zwei Halbschalen, die ihrerseits ebenfalls zusammensteckbar sind. Die Tüllenhalter dienen dem Aufnehmen von Tüllen, im Allgemeinen aus Gummi oder dergleichen zum Hindurchführen von Kabeln. Diese Ausführungsform hat den Nachteil, dass sie zahlreiche Einzelteile umfasst.

Die WO 01/42046 beschreibt einen gattungsgemäßen Kabelhalter, der zwei U-förmige, miteinander identische Bauteile umfasst. Jedes Bauteil weist Stege auf. Die Stege der beiden Bauteile sind derart paarweise angeordnet, dass sie Räume zum Aufnehmen von Tüllen begrenzen. Beim Zusammenbau müssen die Tüllen zunächst mit Kabeln bestückt werden, sodann werden die kabelbestückten Tüllen in die Räume zwischen den Stegen eingelegt, und die Bauteile zusammengefügt und miteinander verschraubt. Dass beide Bauteile mit Tüllen und zugleich Kabeln bestückt sind, macht das Zusammenfügen der beiden Bauteile für den Monteur kompliziert und erfordert besondere Sorgfalt beim Hantieren der beiden Bauteile.

Die DE 198 52 133 A1 zeigt eine Kettenglied einer Energieführungskette, welches aus zwei verrastbaren Teilen besteht, zwischen welchen Regalböden eingeklemmt werden. Auf diesen liegen in der Kette geführte Kabel und Leitungen auf.

Zum weiteren Stand der Technik kann ferner auf die US 3,203,655 A sowie die DE 9407 618 U1 hingewiesen werden.

Der Erfindung liegt die Aufgabe zugrunde, einen rechteckigen Kabelhalter gemäß dem Oberbegriff von Anspruch 1 derart zu gestalten, dass er gegenüber dem Stand der Technik weniger Teile aufweist, dass das Konfektionieren einen geringeren Arbeitsaufwand erfordert, und dass er somit insgesamt kostengünstiger ist.

Diese Aufgabe wird durch die Merkmale von Anspruch 1 gelöst.

Damit wird eine Schnappverbindung zwischen Riegel und U-Rahmen geschaffen. Ein solcher Kabelhalter benötigt weniger Teile, als jene gemäß dem Stande der Technik. Vor allem bedarf es keinerlei Schrauben oder sonstiger Befestigungsmittel zum Herstellen einer Verbindung zwischen Riegel und U-Rahmen. Die erfindungsgemäße Verbindung ist auch derart zuverlässig, dass sie auf die vom Rahmen umschlossenen Tüllen einen angemessenen Druck ausübt. Es ist nur ein einziger U-Rahmen und ein einziger Riegel vorgesehen. Beide bestehen aus gummielastischem Material, beispielsweise einem Kunststoff. Beide lassen sich zumindest in einem gewissen Maße verbiegen. Insbesondere kann es vorteilhaft sein, wenn der U-förmige Rahmen aufbiegbar ist. Auch können die beiden Schenkel durch Verbiegen geringfügig nach außen geneigt werden, sodass der Abstand zwischen den beiden Schenkelenden zum Aufnehmen des Riegels vergrößert, und damit das Einlegen des Riegels zwischen die beiden Schenkel erleichtert wird. Gleiches gilt natürlich auch für das Herausnehmen des Riegels. Um ein solches Spreizen oder Aufbiegen zu erleichtern, könnte an irgendeiner Stelle des U-Rahmens eine gewisse Schwächung vorgenommen werden, beispielsweise in der Mitte des Steges des U-Rahmens. Die Schwächung muss natürlich derart bemessen werden, dass in montiertem Zustand der Riegel immer noch zuverlässig zwischen den beiden freien Schenkelenden fixiert ist und auch einen ausreichenden Druck auf die Tüllen ausüben kann.

Wichtig ist, das nur ein einziger U-Rahmen vorgesehen wird, umfassend einen Steg sowie zwei vom Steg miteinander verbundenen Schenkel.

Der U-Rahmen enthält weiterhin eine Anzahl von Trennwänden. Diese verlaufen parallel zu den beiden Schenkeln und haben dieselbe Länge wie die Schenkel. Durch diesen Aufbau wird das Montieren des Kabelhalters für den Monteur leicht. Zunächst werden Tüllen mit Kabeln bestückt. Sodann werden die kabelbestückten Tüllen in die Räume zwischen zwei einander benachbarten Trennwänden beziehungsweise zwischen einer Trennwand und einem Schenkel eingelegt. Sodann wird der Riegel auf die freien Enden der Stege aufgelegt und mit diesen fest verbunden.

Dazu können die freien Enden der Stege des U-Rahmens Rücksprünge aufweisen, und die beiden Enden des Riegels entsprechende Vorsprünge.

Dadurch, dass nur ein einziger U-förmiger Rahmen vorhanden ist, muss der Monteur auch nur mit diesem einen Rahmen sorgfältig hantieren, somit nicht mit zwei U-förmigen, Kabel und Tüllen bestückten Rahmenteilen. Das Verbinden mit dem Riegel ist sodann eine leichte Sache.

Die Trennwände sind von großer Bedeutung für das zuverlässige Einspannen der kabelbestückten Tüllen und für das zuverlässige Positionieren der Kabel. Die Abmessungen von Riegel und U-Rahmen sind derart gewählt, dass nach dem Einlegen der kabelbestückten Tüllen und nach dem Schließen des Riegels ein absolut zuverlässiges Einsperren der kabelbestückten Tüllen erfolgt. Die Trennwände verhindern ein Verformen oder Ausweichen der Tüllen bei Ausüben eines Druckes des Riegels. Die Tüllen sind in den ihnen zur Verfügung stehenden Räumen eingesperrt. Auch die Kabel behalten die vorgesehene Position bei.

Die Erfindung ist anhand der Zeichnung näher erläutert.

Darin ist im Einzelnen folgendes dargestellt:
- Figur 1: zeigt eine Ausführungsform eines Kabelhalters mit einem Riegel, der durch eine Clipsverbindung mit dem U-Rahmen verbindbar ist.
- Figur 2: zeigt einen Ausschnitt aus Figur 1 in vergrößertem Maßstab.
- Figur 3: zeigt einen weiteren Ausschnitt aus Figur 1, wiederum in vergrößertem Maßstab.

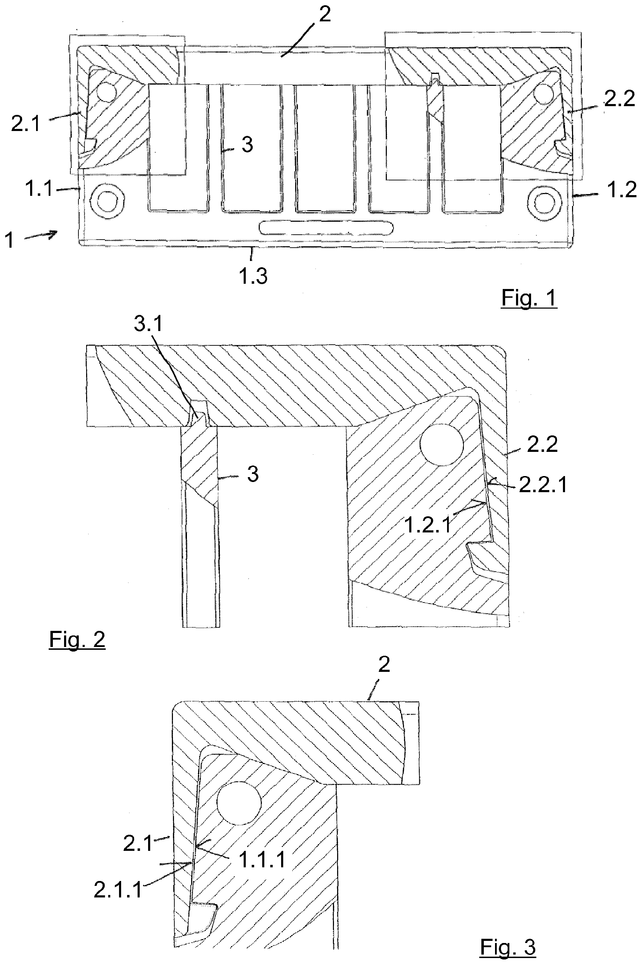

In Figur 1 erkennt man einen Kabelhalter. Dieser befindet sich in geschlossenem Zustand. Der Halter weist einen U-förmigen Rahmen 1 auf, ferner einen Riegel 2. Der Riegel ist im Wesentlichen stabförmig. Sämtliche gezeigten Teile bestehen aus einem gummielastischem Material, beispielsweise aus Weichplastik oder einem anderen Kunststoff.

Der U-förmige Rahmen umfasst zwei Schenkel 1.1, 1.2 sowie einen diese beiden miteinander verbindenden Steg. Der Steg und die Schenkel können einteilig sein. Dies ist jedoch nicht notwendig.

Es sind Trennwände 3 vorgesehen, die im vorliegenden Falle senkrecht auf dem Steg 1.3 des U-Rahmens 1 stehen. Sie bilden miteinander beziehungsweise mit angrenzenden Schenkeln Zwischenräume. In diese werden Tüllen 4 eingeführt. Die Trennwände 3 sind aber nicht unbedingt notwendig. Werden sie weggelassen, so wird der gesamte, vom U-Rahmen 1 umschlossene Raum mit Tüllen angefüllt. Die Tüllen liegen sodann eng aneinander und übereinander. Die Tüllen haben Schlitze, sodass sie zum Zwecke des Einlegens von Kabeln aufspreizbar sind. Zur Vereinfachung sind die Kabel hier nicht dargestellt. Sie befinden sich aber im montierten Zustand in der zylindrischen Bohrung. Tüllen sind hier keine dargestellt. Es versteht sich aber, dass in diesem geschlossenen Zustand eingelegte Tüllen mit in diesen eingelegten Kabeln unter Druck fest umschlossen sind und damit eine kompakte Einheit bilden.

Rahmen 1 und Riegel 2 können voll und ganz aus elastischem Material bestehen. Es ist aber auch möglich, dass nur ein einziges dieser beiden Teile hieraus besteht. Auch ist es denkbar, jene Bereiche aus elastischem Material herzustellen, die miteinander zusammenwirken, nämlich die Endbereiche der Schenkel 1.1, 1.2 sowie die Endbereiche des Riegels 2.

Man erkennt in Figur 1 und 2 Trennwände 3. Deren freien Enden weisen Zapfen 3.1 auf, die bei geschlossenem Rahmen in nicht dargestellte Bohrungen des Riegels 2 eingreifen.

Eine solcher Kabelhalter kann beispielsweise in eine Aussparung einer Wand eingesetzt werden. Die Wand und damit auch die Vorrichtung trennen zwei Räume voneinander ab, erlauben aber dennoch das Hindurchführen von Gegenständen wie Kabeln und so weiter und verhindern in einem gewissen Maße das Ausbreiten der Atmosphäre oder des Staubzustandes des einen Raumes in den anderen Raum.

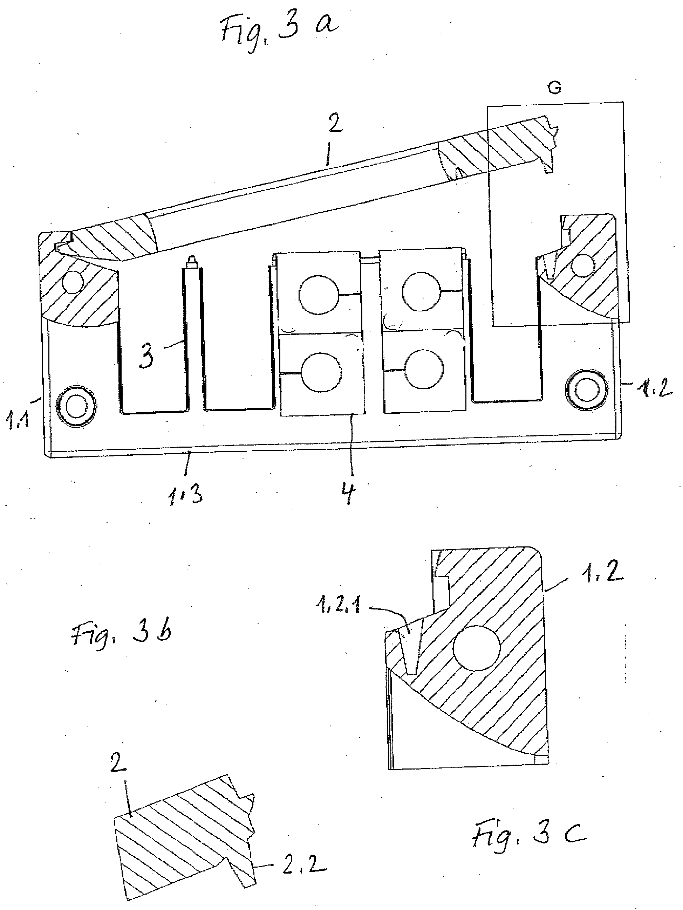

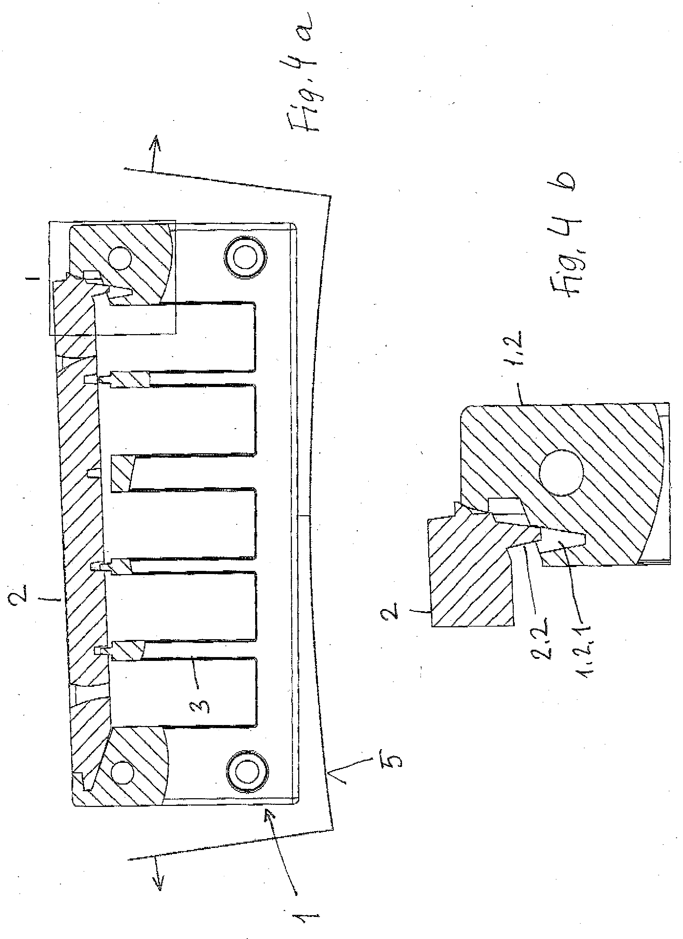

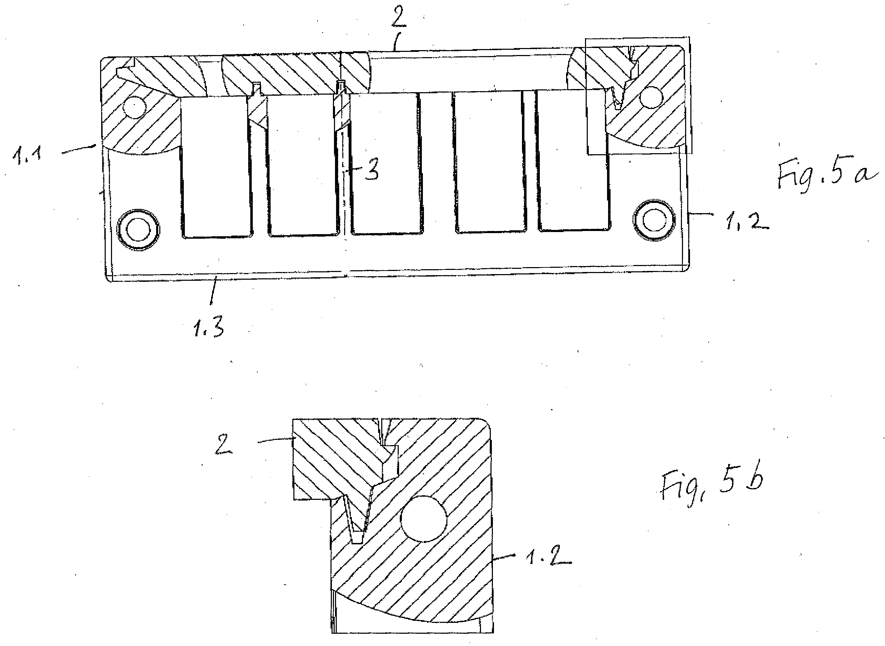

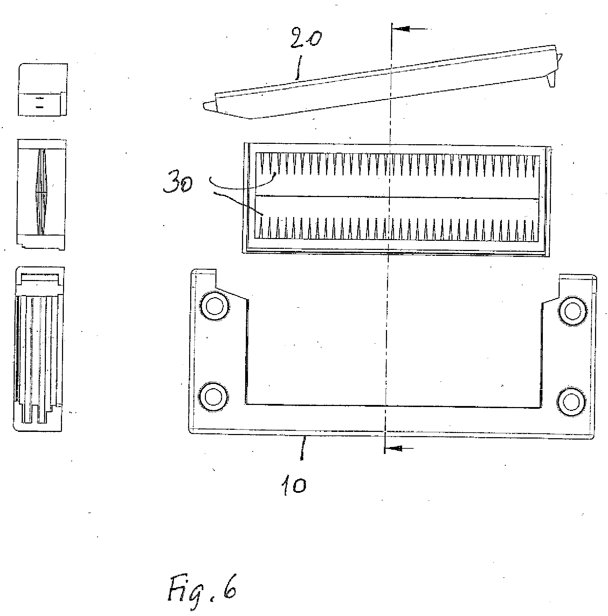

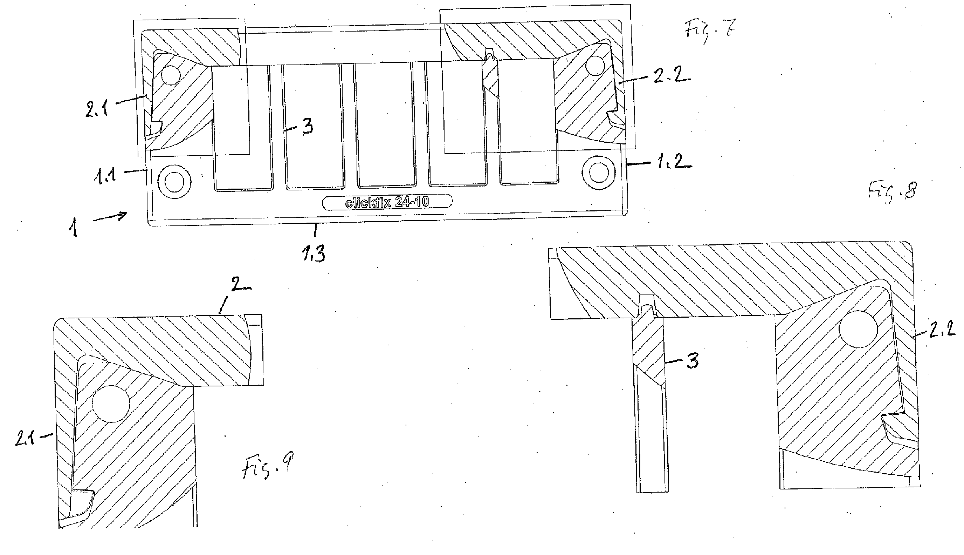

Der in den Figuren 1 bis 3 gezeigte Kabelhalter umfasst einen solchen U-förmigen Rahmen 1 mit zwei Schenkeln 1.1 und einen Riegel 2.Dabei sind Riegel 2 und U-Rahmen 1 durch eine Clips- oder Schnappverbindung miteinander verbunden. Der Riegel weist an seinen beiden Enden einen Zapfen 2.1 beziehungsweise 2.2 auf, und die beiden Schenkel weisen eine Aussparung 1.2.1 beziehungsweise 1.2.2 auf, in die die Zapfen 2.1, 2.2 eingreifen.

## Patentansprüche

1. Rechteckiger Kabelhalter, umfassend die folgenden Merkmale beziehungsweise Bauteile:
einen U-förmigen Rahmen (1) mit zwei Schenkeln (1.1, 1.2) und einem diese beiden miteinander verbindenden Steg (1.3);
eine Anzahl von Tüllen (4), deren jede wenigstens eine Bohrung (4.2) zum Hindurchführen eines Kabels aufweist;
einen U-förmigen Riegel (2), der ebenfalls zwei Schenkel (2.1, 2.2) aufweist; der Riegel (2) ist auf den Rahmen (1) aufschiebbar, sodass diese beiden eine Einheit bilden;
der Riegel (2) oder der Rahmen (1) oder beide bestehen aus elastischem Material;
die Schenkel (2.1, 2.2) des Riegels (2) und die Schenkel (1.1, 1.2) des Rahmens (1) weisen Rücksprünge bzw. Vorsprünge auf;
**gekennzeichnet durch** die folgenden Merkmale:
die Vorsprünge des einen der beiden Teile sind in die Rücksprünge des anderen der beiden Teile zum Herstellen einer Schnappverbindung einrastbar;
der Riegel (2) und dessen Schenkel (2.1, 2.2) sind in der Draufsicht symmetrisch gestaltet;
jeweils ein Schenkel (1.1, 1.2) des Rahmens (1) und ein Schenkel (2.1, 2.2) des Riegels (2) weisen jeweils ein Flächenpaar (1.1.1, 2.1.1; 1.2.1, 2.2.1) auf, dessen Flächen in zusammengefügtem Zustand aneinander anliegen;
die Flächenpaare sind durch eine seitliche innere Fläche (2.1.1, 2.2.1) des jeweiligen Schenkels (2.1, 2.2) des Riegels (2) und eine seitliche äußere Fläche (1.1.1, 1.2.1) des jeweiligen Schenkels (1.1, 1.2) des Rahmens (1) gebildet;
die Flächenpaare (1.1.1, 2.1.1 sowie 1.2.1, 2.2.1) sind gegeneinander geneigt;
die seitlich inneren Flächen der Schenkel (2.1, 2.2) des Riegels (2) weisen die Vorsprünge und die seitlich äußeren Flächen der Schenkel des Rahmens (1) weisen_die Rücksprünge auf.

2. Kabelhalter nach Anspruch 1, **dadurch gekennzeichnet, dass** der Raum zwischen den beiden Schenkeln (1.1, 1.2) durch Trennwände (3) unterteilt ist, deren jede sich in montiertem Zustand vom Steg (1.3) zum Riegel (2) erstreckt, sodass zwischen einander benachbarten Trennwänden (3) oder zwischen einem Schenkel (1.1, 1.2) und der benachbarten Trennwand (3) wenigstens eine Tülle (4) einfügbar ist.

3. Kabelhalter nach Anspruch 2, **dadurch gekennzeichnet, dass** die Trennwände (3) an ihren freien Enden Zapfen (3.1) aufweisen, die bei geschlossenem U-Rahmen (1) in Bohrungen des Riegels (2) eingreifen.

4. Kabelhalter nach einem der Ansprüche 1 bis 3 **gekennzeichnet durch** eine solche Dimensionierung, dass der Riegel (2) im montierten Zustand Druck auf Tüllen (4) ausübt, wenn solche wenigstens einen zwischen zwei einander benachbarten Trennwänden (3) befindlichen Zwischenraum ausfüllen.

## Claims

1. Rectangular cable holder, comprising the following features or components:
a U-shaped frame (1) comprising two legs (1.1, 1.2) and a connecting piece (1.3) interconnecting said two legs;
a number of grommets (4), each of which comprise at least one hole (4.2) for guiding a cable through;
a U-shaped bar (2), which likewise comprises two legs (2.1, 2.2);
the bar (2) can be slid onto the frame (1), such these two components form a unit;
the bar (2) or the frame (1), or both, consist of resilient material;
the legs (2.1, 2.2) of the bar (2) and the legs (1.1, 1.2) of the frame (1) comprise recesses and projections, respectively,
**characterised by** the following features:
the projections on one of the two parts can be latched into the recesses on the other of the two parts in order to establish a snap-in connection;
the bar (2) and the legs (2.1, 2.2) thereof are symmetrical in plan view;
one leg (1.1, 1.2) of the frame (1) and one leg (2.1, 2.2) of the bar (2) each have a pair of surfaces (1.1.1, 2.1.1; 1.2.1, 2.2.1), the surfaces of which abut one another when joined together;
the pairs of surfaces are formed by a lateral inner surface (2.1.1, 2.2.1) of the relevant leg (2.1, 2.2) of the bar (2) and a lateral outer surface (1.1.1, 1.2.1) of the relevant leg (1.1, 1.2) of the frame (1);
the pairs of surfaces (1.1.1, 2.1.1 and 1.2.1, 2.2.1) are inclined relative to one another;
the lateral inner surfaces of the legs (2.1, 2.2) of the bar (2) comprise the projections and the lateral outer surfaces of the legs of the frame (1) comprise the recesses.

2. Cable holder according to claim 1, **characterised in that** the space between the two legs (1.1, 1.2) is divided by partitions (3), each of which extends from the connecting piece (1.3) to the bar (2) when fitted, such that at least one grommet (4) can be inserted between adjacent partitions (3) or between a leg (1.1, 1.2) and the adjacent partition (3).

3. Cable holder according to claim 2, **characterised in that** the partitions (3) comprise pins (3.1) at their free ends, which pins engage in holes in the bar (2) when the U-shaped frame (1) is closed.

4. Cable holder according to any of claims 1 to 3, **characterised by** such dimensions that, when fitted, the bar (2) exerts pressure on grommets (4) when they fill at least one space between two adjacent partitions (3).

## Revendications

1. Support de câble rectangulaire, comprenant les caractéristiques ou éléments suivants :
un cadre en forme de U (1) doté de deux branches (1.1, 1.2) et d'une partie médiane (1.3) reliant celles-ci l'une à l'autre ;
plusieurs passe-câbles (4), dont chacun présente au moins un trou (4.2) pour faire passer un câble ;
un verrou en forme de U (2), qui comporte également deux branches (2.1, 2.2) ;
le verrou (2) peut être glissé sur le cadre (1), de telle sorte qu'ils forment tous les deux une unité ;
le verrou (2) ou le cadre (1) ou les deux sont constitués de matériau élastique ;
les branches (2.1, 2.2) du verrou (2) et les branches (1.1, 1.2) du cadre (1) présentent des creux ou des saillies ;
**caractérisé par** les caractéristiques suivantes :
les saillies de l'une des deux pièces peuvent s'enclencher dans les creux de l'autre des deux pièces pour réaliser une liaison par encliquetage ;
le verrou (2) et ses branches (2.1, 2.2) sont conçus de manière symétrique en vue de dessus ;
une branche (1.1, 1.2) du cadre (1) et une branche (2.1, 2.2) du verrou (2) présentent respectivement une paire de surfaces (1.1.1, 2.1.1 ; 1.2.1, 2.2.1), dont les surfaces s'appliquent l'une contre l'autre à l'état assemblé ;
les paires de surface sont formées par une surface intérieure latérale (2.1.1, 2.2.1) de la branche (2.1, 2.2) respective du verrou (2) et une surface extérieure latérale (1.1.1, 1.2.1) de la branche (1.1, 1.2) respective du cadre (1) ;
les paires de surface (1.1.1, 2.1.1 ainsi que 1.2.1, 2.2.1) sont inclinées l'une vers l'autre ;
les surfaces intérieures latérales des branches (2.1, 2.2) du verrou (2) présentent les saillies et les surfaces extérieures latérales des branches du cadre (1) présentent les creux.

2. Support de câble selon la revendication 1, **caractérisé en ce que** l'espace entre les deux branches (1.1, 1.2) est divisé par des cloisons (3), dont chacune s'étend, à l'état monté, de la partie médiane (1.3) au verrou (2), de telle sorte que, entre des cloisons (3) adjacentes l'une à l'autre ou entre une branche (1.1, 1.2) et la cloison (3) adjacente, au moins un passe-câble (4) peut être inséré.

3. Support de câble selon la revendication 2, **caractérisé en ce que** les cloisons (3) comportent des taquets (3.1) à leurs extrémités libres, qui viennent en prise dans des trous du verrou (2) lorsque le cadre en U (1) est fermé.

4. Support de câble selon l'une des revendications 1 à 3, **caractérisé par** un dimensionnement tel que le verrou (2) exerce, à l'état monté, une pression sur les passe-câbles (4), quand ceux-ci remplissent un espace intermédiaire se trouvant entre deux cloisons (3) adjacentes l'une à l'autre.
